Europäisches Patentamt

European Patent Office

Office européen des brevets

(11) Veröffentlichungsnummer : **0 129 816**
**B1**

# EUROPÄISCHE PATENTSCHRIFT

(45) Veröffentlichungstag der Patentschrift :
04.05.88

(51) Int. Cl.⁴ : **B 65 D 88/30, B 60 P 1/48**

(21) Anmeldenummer : 84106934.7

(22) Anmeldetag : 16.06.84

(54) Geschlossener Behälter für schütt- oder fliessfähiges Gut, insbesondere Baustoff.

(30) Priorität : 24.06.83 DE 3322698

(43) Veröffentlichungstag der Anmeldung :
02.01.85 Patentblatt 85/01

(45) Bekanntmachung des Hinweises auf die Patenterteilung : 04.05.88 Patentblatt 88/18

(84) Benannte Vertragsstaaten :
AT BE CH DE FR IT LI LU NL

(56) Entgegenhaltungen :
DE-A- 1 434 596
DE-A- 3 140 358
FR-A- 2 153 313

(73) Patentinhaber : **P.F.T. Putz- und Fördertechnik GmbH
D-8715 Iphofen (DE)**

(72) Erfinder : **Irsch, Hans-Peter
Marsweg 1
D-6620 Völklingen (DE)**

(74) Vertreter : **Bernhardt, Winfrid, Dr.-Ing.
Kobenhüttenweg 43
D-6600 Saarbrücken (DE)**

## Beschreibung

Die Erfindung betrifft einen geschlossenen Behälter für schütt- oder fließfähiges Gut, insbesondere Baustoff, mit einer durch ein Untergestell mit Abstand über dem Boden angeordneten, verschließbaren Auslauföffnung an einem Auslauftrichter über dem der Behälter jeweils einander gegenüber zwei Breitseiten und zwei Schmalseiten aufweist, wobei er

a) an zwei gegenüberliegenden Seiten jeweils mindestens eine Anhängestelle zum Aufhängen an Schwenkarmen eines Lastfahrzeugs, insbesondere eines Mulden-Absetzkippers, über Verbindungsglieder aufweist und ein Gegenelement für einen mit einem Sicherungsteil versehenen Haken an der Rückseite des Lastfahrzeugs aufweist und wobei

b) die Anordnungen der Anhängestelle und des Gegenelements sowie die Länge der Verbindungsglieder zwischen der Anhängestelle und den Schwenkarmen derart getroffen und aufeinander abgestimmt sind, daß der Behälter damit durch Drehung um den Haken aus senkrecht stehender Stellung dem Lastfahrzeug waagerecht aufgeladen werden und zurück in senkrechte Stellung gebracht werden kann, in der sich sein Standgestell mindestens annähernd bis auf den Boden erstreckt.

Der Erfindung liegt die Aufgabe zugrunde, einen solchen, aus der DE-A-21 48 048 bekannten Behälter unterschiedlichen Mengenbedürfnissen anzupassen.

Gemäß der Erfindung wird dieser Zweck dadurch erfüllt, daß der Behälter die Anhängestellen an den Schmalseiten aufweist und an einer Breitseite durch lösbare Verbindungsmittel mit einem weiteren, im wesentlichen gleichen Behälter zu einer starren Einheit zusammensetzbar ist, die mittels des genannten Gegenelements des einen Behälters und genannter Anhängestellen des einen und/oder des anderen Behälters und/oder weiterer Anhängestellen auch als ganzes über genannte und/oder weitere Verbindungsglieder an den Schwenkarmen des Lastfahrzeugs aufgehängt werden und entsprechend b) aufgeladen und abgesetzt werden kann.

Der Behälter, der dabei einen vergleichsweise länglichen waagerechten (bei stehendem Behälter) Querschnitt hat, kann sowohl einzeln als auch zusammen mit einem weiteren solchen Behälter transportiert, abgeladen und aufgeladen werden. So können z. B. zwei Behälter an verschiedenen Baustellen abgesetzt und wieder abgeholt werden oder für ein und dieselbe Baustelle mit verschiedenen Materialien gefüllt werden. Beides wirkt sich besonders vorteilhaft bei kleineren Baustellen und längeren Anfahrten aus.

Der Behälter kann an den beiden Schmalseiten, wie es aus der DE-A-21 48 048, dort an den Breitseiten, ebenfalls bekannt ist, jeweils drei Anhängestellen zum Aufhängen an den Schwenkarmen des Lastfahrzeugs, dessen genannter Haken auf- und abschwenkbar ist, über flexible Verbindungsglieder aufweisen, von denen mindestens eine Anhängestelle auf der einen Seite und mindestens eine Anhängestelle auf der anderen Seite der die beiden Schmalseiten schneidenden Längsmittelebene des Behälters liegt, wobei

c) die Anordnungen und Abstimmungen gemäß b) ferner derart getroffen sind, daß der Behälter in senkrechter Stellung an den genannten beiden zu verschiedenen Seiten der Längsmittelebene liegenden Anhängestellen hängt und in waagerechter Stellung an derjenigen dieser beiden Anhängestellen, die dann unter der Längsmittelebene liegt, sowie an der dritten Anhängestelle hängt.

In dieser Ausgestaltung läßt sich der Behälter besonders leicht und reibungslos absetzen und wieder aufnehmen : Er hängt in allen Stellungen ohne Mittragen des Hakens allein an den Verbindungsgliedern und kann unter Einbeziehung einer Schwenkung des Hakens auch auf etwas ungleichmäßigem Boden vollständig und sauber aufgesetzt und mühelos wieder aufgenommen werden.

Andererseits erlaubt gerade der schmalere, leichtere neue Behälter umso eher die etwas unvollkommenere und rauhere Handhabung, die sich mit jeweils nur einer Anhängestelle oder zwei Anhängestellen ergibt.

Für die aus zwei solchen Behältern zusammengesetzte Einheit ist allerdings die geschilderte Handhabung mit jeweils drei Anhängestellen zwar nicht zwingend, aber doch empfehlenswert.

Die Einheit als ganzes sollte daher an ihren von den Schmalseiten der Behälter eingenommenen beiden Seiten jeweils drei Anhängestellen zum Aufhängen an den Schwenkarmen des Lastfahrzeugs, dessen genannter Haken auf- und abschwenkbar ist, über flexible Verbindungsglieder aufweisen, von denen mindestens eine Anhängestelle auf der einen Seite und mindestens eine Anhängestelle auf der anderen Seite der die genannten beiden Seiten schneidenden Längsmittelebene der Einheit liegt, wobei die Anordnungen und Abstimmungen für die Einheit als ganzes entsprechend c) zutreffend sind.

So können z. B. jeweils zwei der drei Anhängestellen der Einheit unter der Längsmittelebene der Einheit, aber über der Längsmittelebene des bei waagerecht liegender Einheit unteren Behälters liegen und dieser kann, wenn für sich, mittels dieser zwei Anhängestellen gemäß b) aufzuladen und abzusetzen sein, und der obere Behälter kann im wesentlichen in gleicher Weise zwei Anhängestellen aufweisen und, wenn für sich, mittels dieser gemäß b) aufzuladen und abzusetzen sei, während die Einheit als ganzes mittels der genannten zwei Anhängestellen des unteren und einer der zwei genannten Anhängestellen des oberen Behälters oder einer weiteren Anhängestelle entsprechend c) aufzuladen und abzusetzen ist.

Diese Kombination stellt einen günstigen Kompromiß zwischen verschiedenen Belangen dar.

Die Zahl der Anhängestellen ist, jedenfalls mit zwei mal zwei, auch an der Einheit noch recht übersichtlich und insofern betriebssicher. Die Anordnung der Anhängestellen kann für die Einheit bestmöglich und für den einzelnen Behälter befriedigend getroffen werden. Die beiden ohnehin an den Armen eines Absetzkippers vorhandenen Ketten können, für die Einheit zusammen mit einem weiteren Verbindungsglied, unverändert benutzt werden.

Grundsätzlich sind aber, wie oben aus der Erfindungsdefinition hervorgeht, die verschiedensten Kombinationen von Anhängestellen und ihrer Verwendung möglich. So könnte z. B. der Behälter eine Anhängestelle oder mehrere Anhängestellen nur für sich selbst und eine andere Anhängestelle oder mehrere andere Anhängestellen nur für die Einheit aufweisen, es könnten für einen Behälter allein und für die Einheit verschiedene Verbindungsglieder vor= gesehen sein, und dazwischen sind die verschiedensten Überschneidungen möglich.

Eine für die Erfindung zweckmäßige Ausgestaltung des Standgestells besteht darin, daß der Behälter mit Ausnahme eines Auslauftrichters im wesentlichen quaderförmig ist und sein Standgestell je zwei an den beiden Breitseiten des Behälters angeordnete Stützen aufweist, von denen die auf der einen Breitseite angeordneten Stützen mit einem Spiel zwischen die auf der anderen Breitseite angeordneten Stützen eines anderen, gleichen Behälters passen, wobei jeweils zwei in der Einheit benachbarte Stützen durch ein Zwischenglied überbrückt sind, das mit der einen Stütze verschweißt und mit der anderen durch ein Kupplungselement verbindbar ist.

Die Zeichnungen geben ein Ausführungsbeispiel der Erfindung wieder.

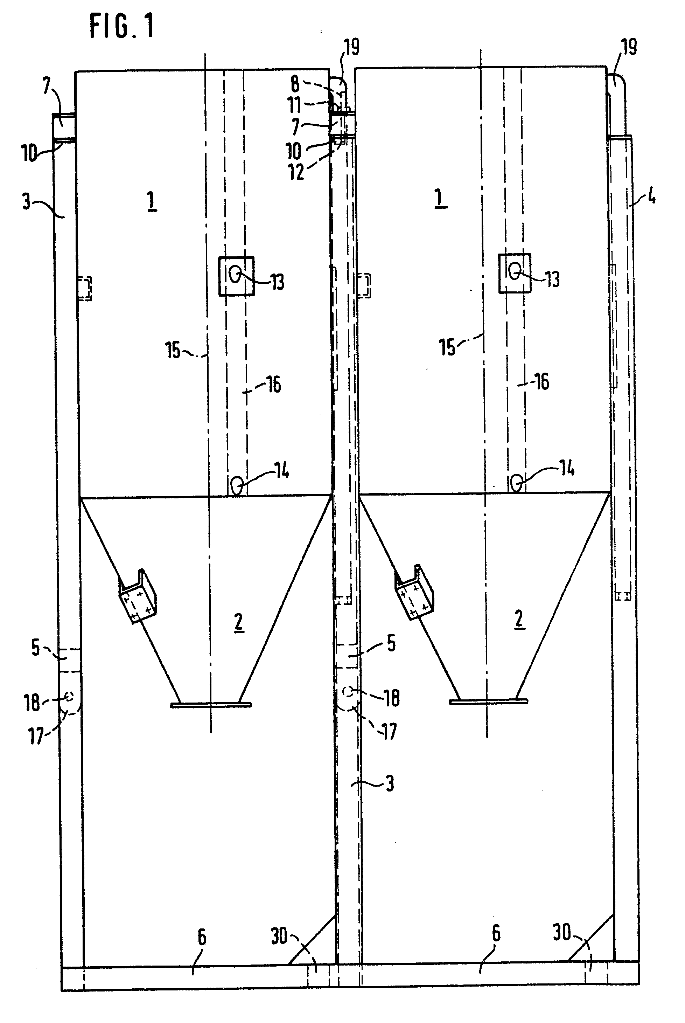

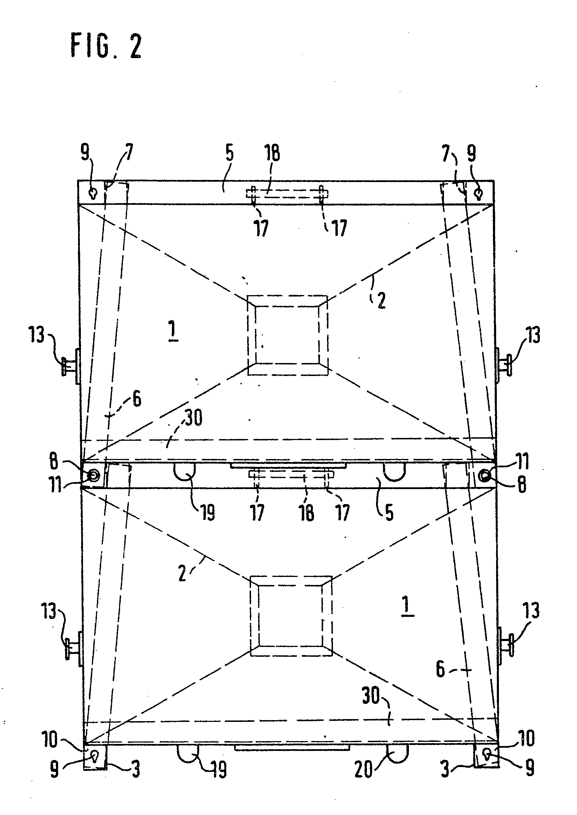

Fig. 1 zeigt zwei zu einer Einheit zusammengesetzte Behälter in Seitenansicht gemäß Fig. 2 von links.

Fig. 2 zeigt die Einheit in Draufsicht.

Fig. 3 und

Fig. 4 zeigen die Einheit in verschiedenen Stellungen beim Auf- oder Abladen.

Fig. 5 zeigt einen einzelnen Behälter der Einheit beim Auf- oder Abladen in einer etwa Fig. 4 entsprechenden Stellung.

Die beiden Behälter 1 sind jeweils quaderförmig aus z. B. 4 mm dickem Blech geschweißt und mit einem Auslauftrichter 2 sowie mit Stützen 3 und 4 versehen, die an den beiden Breitseiten des Behälters befestigt und durch einen Querbalken 5 zwischen den Stützen 4, einen Querbalken 30 etwa zwischen den Stützen 3 und zwei Querbalken 6 zwischen je einer Stütze 3 und einer Stütze 4 zu einem Standgestell verbunden sind. Die Querbalken 30 und 6 befinden sich in Bodenhöhe.

Die Stützen 3 sind am Rand der Breitseite, d. h. fluchtend mit den Schmalseiten des Behälters, angeordnet. Die Stützen 4 sind in solchem Abstand vom Rand der Breitseite angeordnet, daß sie zum Zusammensetzen von zwei solchen Behältern zu einer Einheit mit einem Spiel zwischen die Stützen 3 des anderen Behälters passen. Die beiden jeweils nebeneinanderliegenden Stützen 3 und 4 werden dabei an ihren oberen Enden verbunden durch ein Zwischenglied 7 von gleichem kastenförmigen Querschnitt wie die Stützen, das auf der Stütze 4 angeschweißt ist, sich über die Stütze 3 erstreckt und mit dieser von oben her durch einen Bolzen 8 verbunden wird.

Der Bolzen 8 durchsetzt schlüssellochförmige Ausnehmungen 9 im Zwischenglied 7 und in einer Deckplatte 10 der Stütze 3. Er liegt mit einem Bund 11 auf dem Zwischenglied 7 und greift mit einem Finger 12 unter die Deckplatte 10, der in der Weise eines Schlüsselbarts durch die schlüssellochförmigen Ausnehmungen 9 hindurchgeschoben und dann durch Drehen des Bolzens verschwenkt wird. In der Schließstellung kann der Bolzen durch einfache Mittel arretierbar sein.

An den beiden Schmalseiten der Behälter sind jeweils zwei Kettenknöpfe 13 und 14 auf einer Parallelen zur Behälterachse 15 angebracht. Die Behälterwand ist hier auf der Innenseite durch eine Leiste 16 verstärkt.

An der Unterseite des Querbalkens 5 ist über zwei Laschen 17 eine kurze runde Stange 18 befestigt.

Zum Befüllen und zum Be- und Entlüften des Behälters sind zwei Leitungen 19 und 20 vorgesehen.

Der Querschnitt der Einheit ist kompakter als der demgegenüber etwas längliche Querschnitt der einzelnen Behälter.

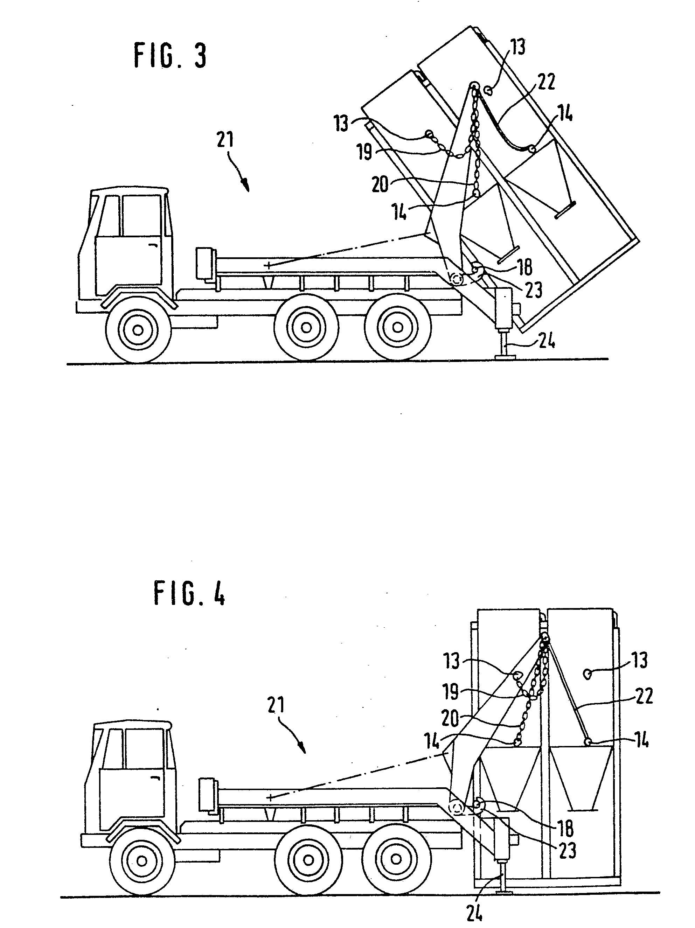

Wie in Figur 3 und 4 gezeigt, hängt die aus den beiden Behältern 1 zusammemgesetzte Einheit beim Auf- und Abladen auf jeder Seite mit den Kettenknöpfen 13 und 14 des einen, in der aufgeladenen Stellung unteren Behälters an den beiden Ketten 19 und 20 eines Mulden-Absetzkippers 21 und mit den Kettenknöpfen 14 des anderen Behälters an einem Seil 22, das z. B. am obersten Glied der Kette 20 eingehängt worden ist. Die Stange 18 des unteren Behälters sitzt in dem mit einem Sicherungsteil versehenen Haken 23 des Absetzkippers. Die Standbeine 24 des Absetzkippers sind ausgefahren.

Wird die Einheit aufgeladen, hängt sie zunächst allein an den unteren Kettenknöpfen 14 der beiden Behälter. Diese befinden sich zu beiden Seiten der Längsmittelebene der Einheit, d. h. der Verbindungsebene zwischen den beiden Behältern. Bei fortschreitendem Schwenkweg der Arme des Absetzkippers verlagert sich das Gewicht mehr und mehr auf die Kettenknöpfe 14 des unteren der beiden Behälter und dann außerdem auf dessen Kettenknöpfe 13 ; der Kraftangriff an den Kettenknöpfen 14 des oberen Behälters verschwindet, das Seil 22 auf den beiden Seiten wird schlaff.

Der obere Behälter liegt auf dem unteren und stützt sich am oberen Ende über seine Zwischenglieder 7 auf den Stützen 3 des unteren Behälters ab. Diese Abstützung ist von Anfang an vorhanden : An der Lage der Kette 20 und des Seils 22 in Figur 4 ist zu erkennen, daß die am einen, nachher unteren, Behälter angreifenden Ketten 20 stärker tragen als die am anderen Behälter angreifenden Seile 22. (Der Haken 23 ist auf- und abschwenkbar und trägt daher nicht.) Unter diesen Umständen reicht die beschriebene Verbindung der beiden Behälter über die Zwischenglieder 7 und die Bolzen 8 aus.

Am Ende der Schwenkung legen sich die beiden Behälter waagerecht auf die Ladefläche des Absetzkippers.

Das Absetzen vollzieht sich gleichermaßen in umgekehrter Reihenfolge. Der Haken 23 wird dabei jedoch auf Zug beansprucht, während beim Aufladen die Stange 18 gegen das Sicherungsteil des Hakens drückt. Am Ende setzen sich die beiden Behälter auf den Boden. Die Stange 18 ist dafür etwa in gleicher Höhe wie der Haken 23 über dem Boden angeordnet. Die Schwenkfreiheit des Hakens ermöglicht dabei eine selbsttätige Anpassing an Bodenunebenheiten. Der Haken könnte auch kurz vor dem Aufsetzen der Behälter auf dem Boden ausgeklinkt werden.

Ein Behälter allein wird ebenso an dem Absetzkipper angehängt wie in der vorstehenden Beschreibung der untere Behälter der Einheit. Während der Schwerpunkt der Einheit in und nahe der senkrechten Stellung zwischen den Ketten 20 und den Seilen 22 liegt, befindet sich der Schwerpunkt des einzelnen Behälters jedoch zwischen den Ketten 20 und dem Haken 23, so daß dieser mit tragen oder eine andere Abstützung vorgenommen werden muß. Um den Haken 23 in der gleichen Stellung des Behälters gegenüber dem Absetzkipper und dem Boden in der er zur Handhabung der Einheit auf- und abschwenkbar sein soll, andererseits den einzelnen Behälter mit tragen zu lassen, kann man ihm eine in einfacher Weise je nach Bedarf anzubringende und zu entfernende Unterstützung, Arretierung o. dgl. geben und das vollständige Absetzen des Behälters durch Einziehen der Standbeine 24 des Absetzkippers bewerkstelligen.

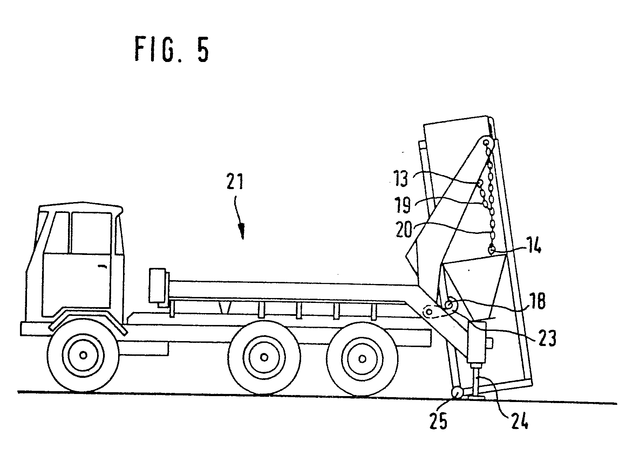

Man kann auch, wie in Fig. 5 dargestellt, stattdessen oder ggf. zusätzlich den Behälter 1 an seinem unter der Stange 18 liegenden Ende mit Rollen 25 versehen und ihn in noch etwas schräger Stellung zunächst mit diesen Rollen auf dem Boden aufsetzen lassen und dann durch Weiterbewegung der Schwenkarme des Absetzkippers um den Haken 23 herum bis zur vollständigen Aufstellung auf dem Boden weiterschwenken, wobei die Rollen über den Boden laufen. In dieser Weise könnte man ohne sonderliche Schwierigkeit auch die Einheit bei entsprechender Aufhängung absetzen oder einen einzelnen Behälter von der Größenordnung der Einheit.

Soll von zwei Behältern nur einer abgeladen oder zusätzlich zu einem Behälter ein zweiter aufgeladen werden, wird jeweils erst die Einheit bzw. der einzelne Behälter abgesetzt oder waagerecht abgelegt und dann die Einheit getrennt bzw. zusammengestellt bzw.-gelegt und darauf der einzelne Behälter bzw. die Einheit wieder aufgenommen.

Die Anwendungsmöglichkeiten des neuen Behälters sind äußerst vielgestaltig.

Man kann z. B. an dieselbe Baustelle in dem einen Behälter Kalkzementputz für den Keller und in dem anderen Gipsputz für die Wohnung heranbringen oder Innenputz und Außenputz, Innenputz und Estrich, Grundputz und Deckputz u.a.m.

An verschiedene Baustellen kann man jegliche, auch gleiche Materialien liefern.

Man kann sich auch jahreszeitlichen Schwankungen anpassen und bei größerem Bedarf mit der Einheit und bei kleinerem Bedarf nur mit einem einzelnen Behälter fahren.

**Patentansprüche**

1. Geschlossener Behälter (1) für schütt- oder fließfähiges Gut, insbesondere Baustoff, mit einer durch ein Standgestell (3-7) mit Abstand über dem Boden angeordneten, verschließbaren Auslauföffnung an einem Auslauftrichter (2), über dem der Behälter (1) jeweils einander gegenüber zwei Breitseiten und zwei Schmalseiten aufweist, wobei er

a) an zwei gegenüberliegenden Seiten jeweils mindestens eine Anhängestelle (13 ; 14) zum Aufhängen an Schwenkarmen eines Lastfahrzeugs, insbesondere eines Mulden-Absetzkippers (21), über Verbindungsglieder (19 ; 20) aufweist und ein Gegenelement (18) für einen mit einem Sicherungsteil versehenen Haken (23) an der Rückseite des Lastfahrzeugs (21) aufweist und wobei

b) die Anordnungen der Anhängestelle (13 ; 14) und des Gegenelements (18) sowie die Länge der Verbindungsglieder (19 ; 20) zwischen der Anhängestelle (13 ; 14) und den Schwenkarmen derart getroffen und aufeinander abgestimmt sind, daß der Behälter (1) damit durch Drehung um den Haken (23) aus senkrecht stehender Stellung dem Lastfahrzeug (21) waagerecht aufgeladen werden und zurück in senkrechte Stellung gebracht werden kann, in der sich sein Standgestell (3-7) mindestens annähernd bis auf den Boden erstreckt, dadurch gekennzeichnet, daß der Behälter (1) die Anhängestellen (13 ; 14) an den Schmalseiten aufweist und an einer Breitseite durch lösbare Verbindungsmittel (8-12) mit einem weiteren, im wesentlichen gleichen Behälter (1) zu einer starren Einheit zusammensetzbar ist, die mittels des genannten Gegenelements (18) des einen Behälters und genannten Anhängestellen (13 ; 14) des einen und/oder des anderen Behälters (1) und/oder weiterer Anhängestellen auch als ganzes über genannte (19 ; 20) und/oder weitere Verbindungsglieder (29) an den Schwenkarmen des Lastfahrzeugs (21) aufgehängt werden und entsprechend b) aufgeladen und abgesetzt werden kann.

2. Behälter nach Anspruch 1, dadurch gekennzeichnet, daß er an den beiden Schmalseiten jeweils drei Anhängestellen zum Aufhängen an den Schwenkarmen des Lastfahrzeugs, dessen genannter Haken auf- und abschwenkbar ist, über flexible Verbindungsglieder aufweist, von denen mindestens eine Anhängestelle auf der einen Seite und mindestens eine Anhängestelle auf der anderen Seite der die beiden Schmalseiten schneidenden Längsmittelebene des Behälters liegt, und daß

c) die Anordnungen und Abstimmungen gemäß b) ferner derart getroffen sind, daß der Behälter in senkrechter Stellung an den genannten beiden zu verschiedenen Seiten der Längsmittelebene liegenden Anhängestellen hängt und in waagerechter Stellung an derjenigen dieser beiden Anhängestellen, die dann unter der Längsmittelebene liegt, sowie an der dritten Anhängestelle hängt.

3. Behälter nach Anspruch 1 oder 2, dadurch gekennzeichnet, daß die genannte Einheit als ganzes an ihren von den Schmalseiten der Behälter (1) eingenommenen beiden Seiten jeweils drei Anhängestellen (13 ; 14 ; 14) zum Aufhängen an den Schwenkarmen des Lastfahrzeugs (21), dessen genannter Haken (23) auf- und abschwenkbar ist, über flexible Verbindungsglieder (19 ; 20 ; 22) aufweist, von denen mindestens eine Anhängestelle (13 ; 14) auf der einen Seite und mindestens eine Anhängestelle (14) auf der anderen Seite der die genannten beiden Seiten schneidenden Längsmittelebene der Einheit liegt, und daß die Anordnungen und Abstimmungen für die Einheit als ganzes entsprechend c) getroffen sind.

4. Behälter nach Anspruch 2 oder 3, dadurch gekennzeichnet, daß jeweils zwei (13 ; 14) der drei genannten Anhängestellen (13 ; 14 ; 14) bei waagerecht hängendem Behälter bzw. hängenden Behältern unter der genannten Längsmittelebene des Behälters bzw. der Einheit liegen.

5. Behälter nach Anspruch 4, dadurch gekennzeichnet, daß jeweils zwei (13 ; 14) der drei Anhängestellen (13 ; 14 ; 14) der Einheit unter der Längsmittelebene der Einheit, aber über der Längsmittelebene (15) des bei waagerecht liegender Einheit unteren Behälters (1) liegen und dieser, wenn für sich, mittels dieser zwei Anhängestellen (13 ; 14) gemäß b) aufzuladen und abzusetzen ist, daß der obere Behälter (1) im wesentlichen in gleicher Weise zwei Anhängestellen (13 ; 14) aufweist und, wenn für sich, mittels dieser gemäß b) aufzuladen und abzusetzen ist und daß die Einheit als ganzes mittels der zwei genannten Anhängestellen (13 ; 14) des unteren und einer (14) der zwei genannten Anhängestellen (13 ; 14) des oberen Behälters (1) oder einer weiteren Anhängestelle entsprechend c) aufzuladen und abzusetzen ist.

6. Behälter nach einem der Ansprüche 1 bis 5, dadurch gekennzeichnet, daß er mit Ausnahme eines Auslauftrichters im wesentlichen quaderförmig ist und sein Standgestell (3-7) je zwei an den beiden Breitseiten des Behälters angeordnete Stützen (3 ; 4) aufweist, von denen die auf der einen Breitseite angeordneten Stützen (4) mit einem Spiel zwischen die auf der anderen Breitseite angeordneten Stützen (3) eines anderen, gleichen Behälters (1) passen, wobei jeweils zwei in der Einheit benachbarte Stützen (3 ; 4) durch ein Zwischenglied (7) überbrückt sind, das mit der einen Stütze (4) verschweißt und mit der anderen (3) durch ein Kupplungselement (8-12) verbindbar ist.

7. Behälter nach einem der Ansprüche 1 bis 5, dadurch gekennzeichnet, daß sein Standgestell (3-7) an der Seite, an der sich das genannte Gegenelement (18) befindet, unten mit Rollen (25) versehen ist.

## Claims

1. Closed container (1) for chargeable or flowable material, in particular building material having a sealable outlet aperture, disposed at a distance above the ground by a floor-type support (3-7), on a discharge funnel (2), above which the container (1) has two wide sides and two narrow sides respectively opposite one another, in which

a) on two opposite sides respectively it has at least one suspension point (13 ; 14) for suspending on swivel arms of a transport vehicle, in particular a tipping lorry (21), via connecting links (19 ; 20) and has a counter member (18) for a hook (23) on the rear of the transport vehicle (21) provided with a locking member and in which

b) the arrangement of the suspension point (13 ; 14) and of the counter member (18) and also the length of the connecting links (19 ; 20) between the suspension point (13 ; 14) and the swivel arms is made and adjusted with respect to one another in such a way that thereby the container (1) can be horizontally loaded onto the transport vehicle (21) from the vertical position by rotation around the hook and can be brought back into the vertical position, in which its floor-type support (3-7) extends at least approximately to the ground,

characterised in that the container (1) has the suspension points (13 ; 14) on the narrow sides, and on one wide side it can be connected by detachable connecting means (8-12) to a further, essentially similar container (1) to form a rigid unit, which can be suspended by means of the said counter member (18) of one container and said suspension points (13 ; 14) of one and/or of the other container (1) and/or of further suspension points also as a whole via said (19 ; 20) and/or further connecting links (29) on the swivel arms of the transport vehicle (21) and can be loaded and set down according to b).

2. Container according to Claim 1, characterised in that on the two narrow sides respectively it has three suspension points for suspending on the swivel arms of the transport vehicle, the said hook of which can be swung upwards and outwards, via flexible connecting links, of which at least one suspension point lies on one side and at least one suspension point lies on the other side of the longitudinal centre plane of the container cutting the two narrow sides, and in that

c) the arrangements and adjustments as specified in b) are also performed so that in the vertical position the container hangs on the said two suspension points lying on different sides of the longitudinal centre plane and in the horizontal position hangs on the suspension point which then lies under the longitudinal centre plane, and also hangs on the third suspension point.

3. Container according to Claim 1 or 2, characterised in that on its two sides occupied by the narrow sides of the container (1), the said unit as a whole has respectively three suspension points (13 ; 14 ; 14) for suspending on the swivel arms of the transport vehicle (21), the said hook (23) of which can be swung upwards and outwards, via flexible connecting links (19 ; 20 ; 22), of which at least one suspension point (13 ; 14) lies on one side and at least one suspension point (14) lies on the other side of the longitudinal centre plane of the unit cutting the said two sides, and in that the arrangments and adjustments for the unit as a whole are made according to c).

4. Container according to Claim 2 or 3, characterised in that respectively two (13 ; 14) of the three said suspension points (13 ; 14 ; 14) lie under the said longitudinal centre plane of the container or the unit respectively when the container (s) hang (s) horizontally.

5. Container according to Claim 4, characterised in that respectively two (13 ; 14) of the three suspension points (13 ; 14 ; 14) of the unit lie under the longitudinal centre plane of the unit, but they lie above the longitudinal centre line (15) of the lower container (1) when the unit lies horizontally, and this container, if on its own, is to be loaded and set down by means of these two suspension points (13 ; 14) as stipulated in b), in that the upper container (1) essentially similarly has two suspension points (13 ; 14) and, if on its own, it is to be loaded and set down by means of these as stipulated by b) and in that the unit as a whole is to be loaded and set down by means of the two said suspension points (13 ; 14) of the lower container and by means of one (14) of the two said suspension points (13 ; 14) of the upper container (1) or by means of a further suspension point according to c).

6. Container according to one of Claims 1 to 5, characterised in that, with the exception of an outlet funnel, it is substantially rectangular and its floor-type support (3-7) has respectively two legs (3 ; 4) disposed on the two wide sides of the container, of which the legs (4) disposed on one wide side fit with play between the legs of another, similar container (1), which are disposed on the other wide side, in which respectively two legs (3 ; 4) adjacent in the unit are spanned by an intermediary member (7), which is welded to one foot (4) and can be connected to the other foot (3) by a coupling member (8-12).

7. Container according to one of Claims 1 to 5, characterised in that its floor-type support (3-7) is provided with rollers (25) at the bottom on the side on which the said counter member (18) is located.

**Revendications**

1. Récipient fermé (1) pour matières en vrac ou coulantes, notamment pour matériaux de construction, qui comprend, placée dans un bâti (3 à 7) à une certaine distance au-dessus du sol, une ouverture à obturation ménagée dans une trémie de sortie (2), au-dessus de laquelle le récipient (1) comporte, les uns en face des autres, deux côtés larges et deux côtés étroits, dans lequel :

a) deux côtés opposés comportent chacun au moins un point d'accrochage (13, 14), pour la suspension à des bras pivotants d'un camion, notamment d'un camion basculeur à auge (21), par l'intermédiaire d'éléments de liaison (19, 20), un contre-élément (18) associé à un crochet (23) muni d'un élément d'arrêt étant situé à l'arrière du camion (21) et dans lequel :

b) les emplacements des points d'accrochage (13, 14) et du contre-élément (18) ainsi que la longueur des éléments de liaison (19, 20) allant du point d'accrochage (13, 14) aux bras pivotants sont déterminés et coordonnés de telle manière que le récipient (1) peut, en tournant autour du crochet (23) à partir d'une position verticale, être chargé horizontalement sur le camion (21) et être ramené à sa position verticale dans laquelle son bâti (3 a 7) s'étend au moins presque jusqu'au sol, caractérisé en ce que le récipient (1) a ses points d'accrochage (13, 14) sur ses côtés étroits et peut, sur l'un de ses côtés larges, être assemblé par des dispositifs de liaison amovibles (8 à 12) à un autre récipient (1) essentiellement identique, de manière à former avec lui une unité rigide qui, au moyen du contre-élément (18) de l'un des récipients et d'une partie ou de la totalité desdits points d'accrochage (13, 14) de l'un et/ou de l'autre récipient (1) et/ou d'autres points d'accrochage, peut être également suspendue dans sa totalité, par l'intermédiaire d'une partie ou de la totalité desdits éléments de liaison (19, 20) et/ou par d'autres éléments de liaison (29), aux bras pivotants du camion (21) et être chargée et déchargée dans les conditions indiquées à l'alinéa b) précédent.

2. Récipient selon la revendication 1, caractérisé en ce que sur chacun de ses deux côtés étroits il comporte trois points d'accrochage pour la suspension, par l'intermédiaire d'éléments de liaison souples aux bras pivotants du camion dont le crochet peut pivoter vers le haut et vers le bas, l'un au moins des points d'accrochage se trouvant d'un côté du plan médian longitudinal du récipient qui coupe les deux côtés étroits et au moins un point d'accrochage se trouvant de l'autre côté de ce plan et en ce que :

c) les emplacements et les coordinations indiqués à l'alinéa b) sont déterminés de telle manière que, dans sa position verticale, le récipient est suspendu par l'intermédiaire des deux points d'accrochage situés de deux côtés différents du plan médian longitudinal et que, dans sa position horizontale, il est suspendu par l'intermédiaire de celui de ces deux points d'accrochage qui se trouve ensuite au-dessous du plan médian longitudinal ainsi que par l'intermédiaire du troisième point d'accrochage.

3. Récipient selon l'une des revendications 1 ou 2, caractérisé en ce que l'ensemble de l'unité en question comporte, sur chacun de ses deux côtés constitués par les côtés étroits des récipients (1), trois points d'accrochage (13, 14, 14) pour la suspension, par l'intermédiaire d'éléments de liaison souples (19, 20, 22), aux bras pivotants du camion (21) dont le crochet (23) peut pivoter vers le haut et vers le bas, l'un au moins des points d'accrochage (13, 14) se trouvant d'un côté du plan médian longitudinal de l'unité qui coupe les deux côtés en question et au moins un point d'accrochage (14) se trouvant de l'autre côté de ce plan et en ce que les emplacements et les coordinations pour l'ensemble de l'unité sont ceux qui sont indiqués à l'alinéa c).

4. Récipient selon l'une des revendications 2 ou 3, caractérisé en ce que deux (13, 14) des trois points d'accrochage (13, 14, 14) se trouvent, lorsque le ou les récipients sont suspendus horizontalement, au-dessous du plan médian longitudinal du récipient ou de l'unité.

5. Récipient selon la revendication 4, caractérisé en ce que deux (13, 14) des trois points d'accrochage (13, 14, 14) de l'unité se trouvent au-dessous du plan médian longitudinal de l'unité, mais au-dessus du plan médian longitudinal (15) du récipient (1) qui se trouve en dessous quand l'unité est horizontale et qu'en ce qui le concerne, celui-ci doit être chargé et déchargé au moyen de ces deux points d'accrochage (13, 14) dans les conditions indiquées à l'alinéa b), en ce que le récipient supérieur (1) comporte, d'une manière essentiellement identique, deux points d'accrochage (13, 14) et qu'en ce qui le concerne celui-ci doit être chargé et déchargé dans les conditions indiquées à l'alinéa b) et en ce que l'ensemble de l'unité doit être chargé et déchargé dans les conditions indiquées à l'alinéa c) au moyen des deux points d'accrochage (13, 14) du récipient inférieur et de l'un (14) des points d'accrochage (13, 14) du récipient supérieur (1) ou d'un autre point d'accrochage.

6. Récipient selon l'une des revendications 1 à 5, caractérisé en ce qu'à l'exception d'une trémie de sortie il a essentiellement une forme parallélépipédique et que son bâti (3 à 7) comporte, sur chacun des deux côtés larges du récipient, des montants (3 à 4), dont ceux (4) qui se trouvent sur un côté large s'engagent avec un certain jeu entre les montants (3) d'un autre récipient identique (1) qui se trouvent sur l'autre côté large, deux montants (3, 4) voisins dans l'unité étant reliés par un élément intermédiaire (7) qui peut être relié à l'un des montants (4) par soudage et à l'autre montant (3) par un élément d'accouplement (8 à 12).

7. Récipient selon l'une des revendications 1 à 5, caractérisé en ce que, du côté où se trouve le contre-élément (18), le bâti (3 à 7) est, à sa partie inférieure, muni de galets de roulements (25).

FIG. 1

FIG. 2

FIG. 3

FIG. 4

FIG. 5